# EUROPÄISCHE PATENTANMELDUNG

(11) **EP 4 270 699 A1**
(43) Veröffentlichungstag der Anmeldung: **01.11.2023**
(21) Anmeldenummer: 23450001.5
(22) Anmeldetag: 10.03.2023
(51) Int. Cl.: H02G 3/32, H02G 3/38

(54) **HALTEEINRICHTUNG FÜR WENIGSTENS EIN KABEL UND/ODER EINEN KABELSTRANG**

(30) Priorität: 26.04.2022 AT 3822 U
(71) Anmelder: Schnabl Stecktechnik GmbH, 3100 St. Pölten (AT)
(72) Erfinder: Bruckbauer, Wolfgang, 4893 Zell am Moos (AT)
(74) Vertreter: Miksovsky, Alexander

(57) **Zusammenfassung**

Bei einer Halteeinrichtung (1) für wenigstens ein Kabel (15) und/oder einen Kabelstrang (16), welche an einem Boden (3) festlegbar ist, erfolgt eine Positionierung wenigstens eines Kabels (15) und/oder eines Kabelstrangs (16) durch ein Basiselement (2) zur Festlegung der Halteeinrichtung (1) an dem Boden (3) und zwei von den Enden des Basiselements (2) im Wesentlichen normal vorragende Schenkel (4). Weiters ist das Kabel (15) oder der Kabelstrang (16) zwischen den Schenkeln (4) anordenbar und positionierbar und es weist die Halteeinrichtung (1) in Längsrichtung des aufzunehmenden Kabels (15) geringere Abmessungen als in Richtungen normal auf die Längsrichtung des aufzunehmenden Kabels (15) auf. Zusätzlich ist an wenigstens einem Schenkel (4) der Halteeinrichtung (1) und/oder dem Basiselement (2) der Halteeinrichtung (1) wenigstens eine Aufnahme (6, 8) für ein Festlegungselement (17) zum Festlegen wenigstens eines Kabels (15) und/oder eines Kabelstrangs (16) an der Halteeinrichtung (1) vorgesehen.

## Beschreibung

Die vorliegende Erfindung bezieht sich auf eine Halteeinrichtung für wenigstens ein Kabel und/oder einen Kabelstrang, welche an einem Boden festlegbar ist, wobei ein Basiselement zur Festlegung der Halteeinrichtung an dem Boden und zwei von den Enden des Basiselements im Wesentlichen normal vorragende Schenkel vorgesehen sind, wobei das Kabel oder der Kabelstrang zwischen den Schenkeln anordenbar und positionierbar ist, und wobei die Abmessung der Halteeinrichtung in Längsrichtung des aufzunehmenden Kabels oder Kabelstrangs geringer als die Abmessungen der Halteeinrichtung in Richtungen normal auf die Längsrichtung des aufzunehmenden Kabels oder Kabelstrangs ist.

Eine Einrichtung der eingangs genannten Art ist beispielsweise der DE-A 24 31 834 zu entnehmen, wobei auf eine Vereinfachung einer Verlegungsarbeit von Kabeln an einer Wandfläche abgezielt wird. Ähnliche Einrichtungen mit teilweise komplexem Aufbau sind beispielsweise auch der DE-A1 196 36 515, der GB-A 1 500 698, der WO 2014/060773 A1 oder der WO 2016/151286 A1 zu entnehmen.

Bei einer Verlegung eines Kabels und/oder eines Kabelstrangs in einem Boden gibt es neben der Möglichkeit einer Aufnahme derartiger Kabel oder Kabelstränge in Installations- bzw. Rohrleitungen, welche in einem Mauerwerk, einem Estrich oder dgl. unter Putz verlegt werden, zunehmend Vorschläge für ein Verlegen derartiger Kabel oder Kabelstränge in einem doppelten Boden. Bei einem Verlegen von Kabeln und/oder Kabelsträngen bzw. allgemein von elektrischen Leitungen oder dgl. in einer derartigen Konstruktion eines doppelten Bodens kann prinzipiell auf eine Verwendung von Rohrleitungen, wie sie bei einer Verlegung direkt im Mauerwerk oder dgl. insbesondere unter Putz Verwendung finden, verzichtet werden, wobei beispielsweise dennoch Vorschriften im Hinblick auf eine Positionierung derartiger Kabel oder Kabelstränge in derartigen Konstruktionen eines doppelten Bodens zu beachten sind.

Für eine ordnungsgemäße Verlegung derartiger Kabel oder Kabelstränge werden hierzu beispielsweise Kabeltrassen bzw. -rinnen herangezogen, welche einen nicht unbeträchtlichen Kostenaufwand darstellen. Weiters wird versucht, derartige Kabel oder Kabelstränge beispielsweise auch mit den bekannten Einrichtungen der oben genannten Art unmittelbar am Boden zu fixieren, um insbesondere Vorgaben im Hinblick auf eine definierte und beispielsweise durch entsprechende Regelungen vorgeschriebene Positionierung bzw. Verlegung derartiger Kabel oder Kabelstränge in Konstruktionen eines doppelten Bodens zu erfüllen. Eine Verwendung derartiger zusätzlicher Befestigungseinrichtungen für Kabel oder Kabelstränge erfordert üblicherweise einen erhöhten Aufwand und verursacht derart erhöhte Kosten.

Die vorliegende Erfindung zielt darauf ab, die oben genannten Probleme zu beheben bzw. zumindest weitestgehend zu reduzieren, und zielt insbesondere auf die Bereitstellung einer Halteeinrichtung für wenigstens ein Kabel und/oder einen Kabelstrang bzw. Kabelbaum ab, wobei mit einer einfachen Einrichtung eine zuverlässige Positionierung und Festlegung eines derartigen Kabels oder Kabelstrangs beispielsweise in einer Konstruktion eines doppelten Bodens erzielt werden kann.

Zur Lösung dieser Aufgaben ist eine Halteeinrichtung der eingangs genannten Art im Wesentlichen dadurch gekennzeichnet, dass an wenigstens einem Schenkel der Halteeinrichtung und/oder dem Basiselement der Halteeinrichtung wenigstens eine Aufnahme für ein Festlegungselement zum Festlegen wenigstens eines Kabels und/oder zum Bündeln wenigstens einiger Kabel eines Kabelstrangs an der Halteeinrichtung vorgesehen ist. Die erfindungsgemäße Halteeinrichtung ist ein konstruktiv einfach herstellbares Element, welches durch die Festlegung des Basiselements der Halteeinrichtung an dem Boden und das Vorsehen von zwei vorragenden Schenkeln eine zuverlässige Aufnahme und Positionierung wenigstens eines Kabels und/oder eines Kabelstrangs bzw. Kabelbaums sicherstellt. Durch eine entsprechende Bemaßung sowohl des Basiselements als auch der Schenkel kann gewünschtenfalls auch eine große Anzahl von Kabeln oder Kabelsträngen zuverlässig und definiert beispielsweise in einem doppelten Boden aufgenommen werden, um insbesondere gesetzliche Vorschriften für eine Positionierung und Verlegung von derartigen Kabeln oder Kabelsträngen zu erfüllen. Durch die geringe Breite bzw. Erstreckung der Halteeinrichtung in Längsrichtung des aufzunehmenden Kabels oder Kabelstrangs ergibt sich gegenüber der Verwendung von Kabeltrassen oder -schienen ein stark verringerter Materialaufwand und eine vereinfachte Anordnung und Festlegung der Halteeinrichtung bei entsprechend geringerem Zeit- und Kostenaufwand. Weiters ist unter Einsatz der erfindungsgemäßen Halteeinrichtung auch eine Verlegung und Positionierung von Kabeln und Kabelsträngen abweichend von einer exakt geraden Verlegung einfacher durchführbar gegenüber einer Verwendung von üblicher Weise eine große Länge aufweisenden Kabeltrassen bzw. -rinnen und es lassen sich auch Verzweigungen bzw. Abzweigungen von Kabeln oder Teilen von Kabelsträngen durch die erfindungsgemäße Halteeinrichtung leichter erzielen. Diese zuverlässige Positionierung und insbesondere Sicherung eines in bzw. an der Halteeinrichtung festzulegenden Kabels und/oder eine Bündelung wenigstens einiger Kabel eines Kabelstrangs wird durch das Vorsehen wenigstens einer Aufnahme für ein Festlegungselement an wenigstens einem Schenkel und/oder dem Basiselement der Halteeinrichtung unterstützt bzw. erleichtert, wie dies erfindungsgemäß vorgesehen ist.

Für eine besonders einfache Festlegung eines Festlegungselements wird in diesem Zusammenhang gemäß einer bevorzugten Ausführungsform vorgeschlagen, dass die Aufnahme an wenigstens einem Schenkel der Halteeinrichtung, insbesondere an dem vom Basiselement abgewandten Endbereich des Schenkels als eine von einem Durchtrittsloch gebildete Aufnahme für ein Festlegungselement ausgebildet ist. Ein derartiges Durchtrittsloch lässt sich leicht in einem Schenkel der Halteeinrichtung integrieren, so dass für eine Sicherung und Positionierung eines in der Halteeinrichtung aufzunehmenden Kabels oder Kabelstrangs das Festlegungselement unmittelbar durch das Durchtrittsloch der Halteeinrichtung hindurchgeführt und danach mit dem Kabel bzw. Kabelstrang an dieser fixiert werden kann.

Zusätzlich oder alternativ ist für eine Festlegung eines Festlegungselements darüber hinaus vorgesehen, dass die wenigstens eine Aufnahme für ein Festlegungselement des Basiselements an der von der Auflagefläche des Basiselements an dem Boden abgewandten Seite in Form eines in Abstand von der Oberfläche des Basiselements angeordneten Stegs bzw. Fortsatzes ausgebildet ist, wie dies einer weiters bevorzugten Ausführungsform der erfindungsgemäßen Halteeinrichtung entspricht. Derart lassen sich Festlegungselemente an einer Mehrzahl von Stellen an der erfindungsgemäßen Halteeinrichtung gesichert festlegen.

Zur weiteren Sicherstellung der Positionierung und Fixierung eines Festlegungselements an der erfindungsgemäßen Halteeinrichtung wird darüber hinaus vorgeschlagen, dass der Steg bzw. Fortsatz im Wesentlichen parallel zur Oberfläche des Basiselements und an seiner zur Oberfläche des Basiselements gewandten Bodenfläche an seinem freien Ende mit einem Anschlag zur Positionierung des Festlegungselements versehen ist, wie dies einer weiters bevorzugten Ausführungsform der erfindungsgemäßen Halteeinrichtung entspricht.

Für eine Positionierung und insbesondere Sicherung des in der Halteeinrichtung aufzunehmenden wenigstens eines Kabels und/oder eines Kabelstrangs wird darüber hinaus vorgeschlagen, dass das Festlegungselement zum Festlegen wenigstens eines Kabels und/oder zum Bündeln wenigstens einiger Kabel eines Kabelstrangs an wenigstens einem Schenkel oder dem Basiselement von einem Kabelbinder gebildet ist, wie dies einer weiters bevorzugten Ausführungsform der erfindungsgemäßen Halteeinrichtung entspricht. Es kann somit eine zuverlässige Positionierung des wenigstens einen in der Halteeinrichtung aufzunehmenden Kabels oder Kabelstrangs mit einfachen Mitteln sichergestellt werden, wobei beispielsweise Kabelbinder bei einem Verlegen von Kabeln und Kabelsträngen bzw. Kabelbäumen weit verbreitet Verwendung finden und derart neben bei einem Verlegen von Kabeln oder elektrischen Leitungen eingesetzten, weiteren Elementen bzw. Mitteln auch mit der erfindungsgemäßen Halteeinrichtung zum Einsatz gelangen können.

Um einen gegebenenfalls unbeabsichtigten Austritt der in der Halteeinrichtung aufgenommenen Kabel oder Kabelstränge zu vermeiden bzw. zumindest zu behindern, ist gemäß einer bevorzugten Ausführungsform vorgesehen, dass an den vom Basiselement abgewandten Enden der Schenkel in Richtung einer Verringerung des Abstands zwischen den Schenkeln vorragende Verlängerungen vorgesehen sind, welche im Wesentlichen parallel zu dem Basiselement verlaufen. Durch die von den freien Enden der Schenkel in Richtung zum Inneren der Halteeinrichtung vorragenden Verlängerungen wird eine lichte Weite bzw. Aufnahmeöffnung für ein Einbringen des Kabels oder der Kabelstränge in die Halteeinrichtung geringfügig verkleinert, wodurch jedoch ein unbeabsichtigtes Austreten eines Kabels oder Kabelstrangs aus dem Inneren der Halteeinrichtung verhindert werden kann.

Für eine einfache und ordnungsgemäße Festlegung der Halteeinrichtung ist vorgesehen, dass das Basiselement wenigstens eine Durchtrittsöffnung für ein Befestigungselement zur Festlegung der Halteeinrichtung an dem Boden aufweist, wie dies einer bevorzugten Ausführungsform der erfindungsgemäßen Halteeinrichtung entspricht. Durch eine derartige Durchtrittsöffnung lässt sich in einfacher Weise eine Anordnung eines Befestigungselements für eine gesicherte Festlegung der Halteeinrichtung und somit Sicherstellung einer Positionierung der in der Halteeinrichtung aufzunehmenden Kabel oder Kabelstränge ermöglichen.

In diesem Zusammenhang wird gemäß einer bevorzugten Ausführungsform vorgesehen, dass eine Durchtrittsöffnung mit einem von der Oberfläche des Basiselements an der von einer Auflagefläche des Basiselements an dem Boden abgewandten Seite vorragenden Rand bzw. Kragen versehen ist, welcher insbesondere zur Positionierung eines Bolzensetzgeräts zur Einbringung eines Bolzens durch die Durchtrittsöffnung ausgebildet ist. Derart wird erfindungsgemäß nicht nur eine einfache Festlegung der Halteeinrichtung bzw. insbesondere des Basiselements derselben an dem Boden sichergestellt, sondern es wird durch den Rand bzw. Kragen ein Ansetzen bzw. Verwenden eines Bolzensetzgeräts zur Einbringung eines Bolzens durch die Durchtrittsöffnung erleichtert, so dass der Arbeitsaufwand für eine Festlegung der Halteeinrichtung weiter reduziert werden kann.

Für eine alternative oder zusätzliche Festlegung der Halteeinrichtung wird gemäß einer weiters bevorzugten Ausführungsform vorgeschlagen, dass eine zusätzliche Durchtrittsöffnung für ein Befestigungselement insbesondere von einem Langloch gebildet ist, durch welches ein Befestigungselement, wie beispielsweise eine Schraube oder ein Stecknagel, für eine Festlegung des Basiselements insbesondere über einen Dübel im Boden hindurchführbar ist. Derart wird mit der erfindungsgemäßen Halteeinrichtung ermöglicht, eine Vielzahl von unterschiedlichen Befestigungselementen zur Positionierung und Festlegung der Halteeinrichtung an dem Boden einzusetzen, so dass nicht für unterschiedliche Befestigungselemente unterschiedliche Modelle einer erfindungsgemäßen Halteeinrichtung zur Verfügung gestellt werden müssen. Derart wird neben einer einfachen Befestigung auch eine Verringerung einer Lagerhaltung von gegebenenfalls unterschiedlichen Halteeinrichtungen erzielbar, so dass der Aufwand für den Einsatz einer erfindungsgemäßen Halteeinrichtung weiter verringert werden kann.

Bei aufwendigen elektrischen Installationen ist oftmals die Verlegung einer großen Anzahl von Kabeln bzw. Kabelsträngen erforderlich, so dass davon auszugehen ist, dass derartige Kabel oder Kabelstränge in mehreren Bahnen verlegt werden, so dass beispielsweise auch eine Vielzahl von erfindungsgemäßen Halteeinrichtungen oder anderen Einrichtungen zur Verlegung von Kabeln, Kabelsträngen oder Kabelbäumen bzw. allgemein von Leitungen erforderlich wird. Um eine wechselweise Positionierung einer derartigen Vielzahl von Halteeinrichtungen zu erleichtern und jeweils eine definierte Lage bzw. Positionierung einfacher sicherstellen zu können, wird vorgeschlagen, dass wenigstens ein Schenkel an seiner Außenseite mit einer Kopplungseinrichtung für eine Kopplung mit einer weiteren Halteeinrichtung oder einer Schelle, beispielsweise zur Aufnahme einer Rohrleitung ausgebildet ist, wie dies einer weiters bevorzugten Ausführungsform der erfindungsgemäßen Halteeinrichtung entspricht. Derart kann beispielsweise eine Mehrzahl von Halteeinrichtungen nebeneinander angeordnet und insbesondere miteinander gekoppelt werden oder es kann alternativ eine erfindungsgemäße Halteeinrichtung beispielsweise mit einer bekannten Schelle, beispielsweise zur Aufnahme einer Rohrleitung kombiniert bzw. gekoppelt werden.

Zur Aufnahme gegebenenfalls erhöhter mechanischer Beanspruchungen bei einer Aufnahme einer Vielzahl von Kabeln oder Kabelsträngen als auch zur Aufnahme gegebenenfalls erhöhter Kräfte insbesondere bei Einsatz eines Bolzensetzgeräts zur Festlegung der erfindungsgemäßen Halteeinrichtung an einem Boden wird gemäß einer weiters bevorzugten Ausführungsform vorgeschlagen, dass die Halteeinrichtung aus einem widerstandsfähigen Kunststoff, insbesondere Polypropylen, hergestellt ist.

Wie oben bereits mehrfach ausgeführt, ist die erfindungsgemäße Halteeinrichtung für wenigstens ein Kabel und/oder einen Kabelstrang insbesondere zur Halterung und Positionierung wenigstens eines Kabels und/oder eines Kabelstrangs in einem doppelten Boden oder dgl. eines Gebäudes verwendbar bzw. einsetzbar.

Die vorliegende Erfindung wird nachfolgend anhand von einem in der beiliegenden Zeichnung schematisch dargestellten Ausführungsbeispiel näher erläutert. In dieser zeigen:
Fig. 1 eine Seitenansicht einer erfindungsgemäßen Halteeinrichtung für wenigstens ein Kabel und/oder einen Kabelstrang,
Fig. 2 einen Schnitt nach der Linie II der Fig. 1,
Fig. 3 in vergrößertem Maßstab eine Ansicht des Details III der Fig. 1,
Fig. 4 eine Draufsicht gemäß dem Pfeil IV von Fig. 1, wobei Fig. 1 eine Ansicht gemäß dem Pfeil I der Fig. 4 darstellt,
Fig. 5 eine perspektivische Darstellung der erfindungsgemäßen Halteeinrichtung, und
Fig. 6 eine Seitenansicht ähnlich der Darstellung gemäß Fig. 1, wobei eine Aufnahme bzw. Sicherung einer Mehrzahl von Kabeln und Kabelsträngen in der erfindungsgemäßen Halteeinrichtung sowie eine Kopplung derselben mit einer weiteren Halteeinrichtung und einer Schelle angedeutet ist.

In den Figuren ist allgemein mit 1 eine Halteeinrichtung für wenigstens ein Kabel und/oder einen Kabelstrang bezeichnet, wobei die Halteeinrichtung 1 ein Basiselement 2 aufweist, welches an einem schematisch mit 3 angedeuteten Boden festlegbar ist, wie dies nachfolgend noch im Detail erörtert werden wird. Bei einem Einsatz der Halteeinrichtung 1 in einer Konstruktion eines doppelten Bodens ist im Wesentlichen parallel zu dem dargestellten Boden 3 oberhalb der Halteeinrichtung 1 eine nicht näher dargestellte weitere Bodenkonstruktion vorgesehen.

An den Enden des Basiselements 2 der Halteeinrichtung 1 sind Schenkel 4 vorgesehen, welche im Wesentlichen normal von dem Basiselement 2 vorragen. Weiters sind an den freien Enden der Schenkel 4 an dem von dem Basiselement 2 abgewandten Ende in Richtung zueinander vorragende Verlängerungen 5 vorgesehen, welche zu einer geringfügigen Verringerung des Abstands bzw. der lichten Weite zwischen den Schenkeln 4 führen und insbesondere für eine Sicherung gegenüber einem unbeabsichtigten Austreten von in dem Inneren der Halteeinrichtung 1 aufzunehmenden Kabeln und/oder Kabelsträngen dienen sollen.

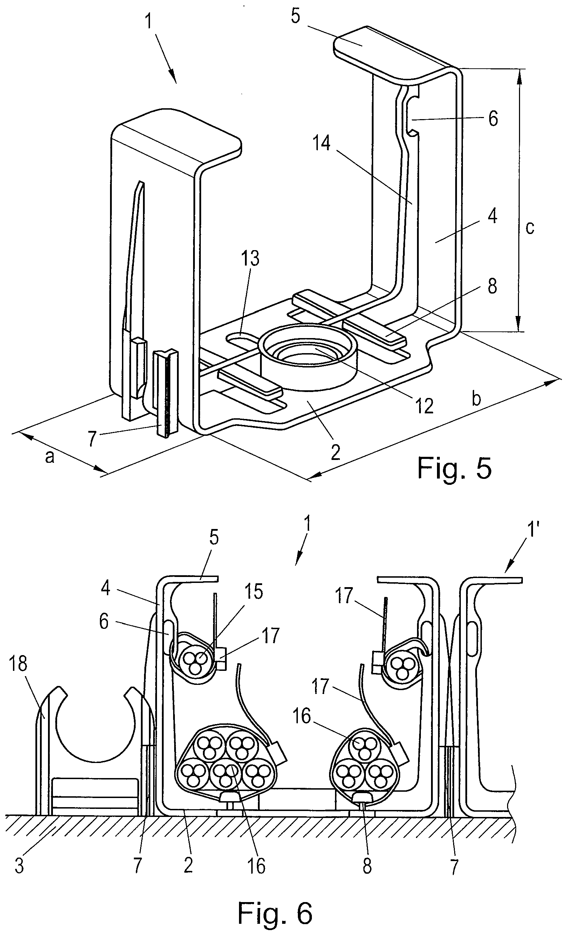

Weiters sind an den Schenkeln 4 jeweils Durchtrittslöcher 6 vorgesehen, welche für eine Aufnahme eines Festlegungselements, insbesondere Kabelbinders, zur Sicherung eines in der Halteeinrichtung 1 aufzunehmenden Kabels oder Kabelstrangs dienen, wie dies insbesondere aus Fig. 6 deutlicher ersichtlich werden wird.

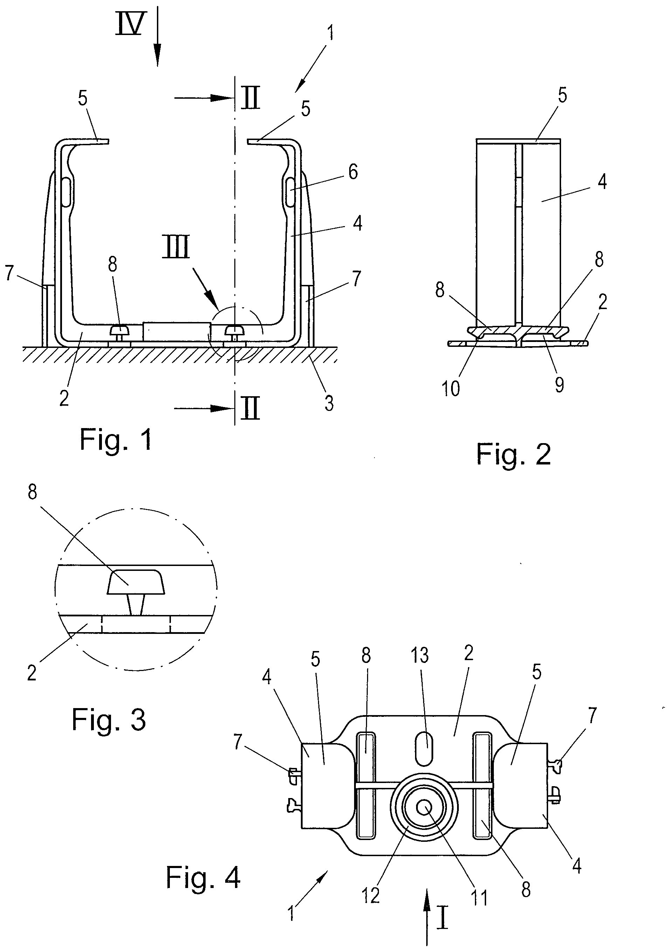

Zusätzlich sind an den Außenseiten bzw. -flächen der Schenkel 4 Kopplungseinrichtungen 7 ersichtlich, über welche eine Kopplung einer Halteeinrichtung 1 mit weiteren Halteeinrichtungen oder beispielsweise einer Schelle für eine ordnungsgemäße gegenseitige Positionierung einer Mehrzahl von derartigen Halteeinrichtungen 1 oder dgl. ermöglicht wird, wie dies insbesondere aus Fig. 4 und 6 nachfolgend deutlicher ersichtlich werden wird.

Neben den Durchtrittslöchern 6 an den Schenkeln 4 für eine Aufnahme von Festlegungselementen, insbesondere Kabelbindern, für in der Halteeinrichtung 1 aufzunehmende Kabel oder Kabelstränge sind auch am Basiselement 2 Aufnahmen für Festlegungselemente vorgesehen, welche in Fig. 1 schematisch mit 8 angedeutet sind.

Aus der detaillierten Darstellung gemäß Fig. 2 und 3 ist ersichtlich, dass diese Aufnahmen bzw. Aufnahmeelemente am Basiselement 2 von im Wesentlichen parallel zu der Basis vorragenden Stegen bzw. Fortsätzen 8 gebildet sind, wie dies insbesondere aus Fig. 2 ersichtlich ist, wobei zwischen der zum Basiselement 2 gewandten Seite der Aufnahmen bzw. Fortsätze 8 und dem Basiselement 2 ein Freiraum 9 verbleibt, in welchem ein Festlegungselement, insbesondere Kabelbinder einsetzbar ist, wie dies insbesondere in Fig. 6 im Detail dargestellt ist.

Für eine sichere Positionierung eines derartigen Festlegungselements bzw. Kabelbinders in dem Freiraum 9 ist darüber hinaus in Fig. 2 ersichtlich, dass die Fortsätze bzw. Stege 8 jeweils an ihrem freien Ende einen Anschlag bzw. Vorsprung 10 aufweisen, welcher ein unbeabsichtigtes Austreten eines in dem Freiraum 9 aufgenommenen Festlegungselements, insbesondere Kabelbinders verhindert.

Aus der Draufsicht gemäß Fig. 4 ist insbesondere die Positionierung dieser von Fortsätzen bzw. Stegen 8 gebildeten Aufnahmen für Festlegungselemente bzw. Kabelbinder nochmals deutlich ersichtlich. Weiters sind an der Außenseite der Schenkel 4 die Kopplungseinrichtungen bzw. Kopplungselemente 7 für eine Kopplung mit benachbart bzw. anschließend anzuordnenden weiteren Halteeinrichtungen 1 oder Schellen oder dgl. dargestellt.

Zusätzlich ist aus Fig. 4 ersichtlich, dass im Basiselement 2 eine Durchtrittsöffnung 11 für ein nicht näher dargestelltes Befestigungselement zur Festlegung des Basiselements 2 der Halteeinrichtung 1 an dem Boden vorgesehen ist. Im Bereich dieser Durchtrittsöffnung 11 ist darüber hinaus ein vorragender Rand bzw. Kragen 12 vorgesehen, welcher beispielsweise zur Positionierung eines nicht näher dargestellten Bolzensetzgeräts zur Einbringung eines Bolzens durch die Durchtrittsöffnung 11 vorgesehen ist, um derart eine zuverlässige und einfache Festlegung der Halteeinrichtung 1 über das Basiselement 2 an einem Boden zu ermöglichen.

Darüber hinaus ist in Fig. 4 eine weitere Durchtrittsöffnung 13 ersichtlich, welche beispielsweise von einem Langloch gebildet ist. Über diese weitere Durchtrittsöffnung 13 kann alternativ und/oder zusätzlich zu einer Verwendung der Durchtrittsöffnung 11 unter Einsatz eines Bolzensetzgeräts eine Festlegung der Halteeinrichtung 1 über das Basiselement 2 durch Anordnen beispielsweise eines Stecknagels oder einer Schraube im Zusammenwirken mit einem nicht näher gezeigten Dübel vorgenommen werden, wie dies allgemein bekannt ist.

Aus der perspektivischen Darstellung gemäß Fig. 5 sind nochmals die wesentlichen Elemente der Halteeinrichtung 1 ersichtlich, wobei insbesondere die von im Wesentlichen parallel zu dem Basiselement 2 verlaufenden Stege bzw. Fortsätze 8 zur Aufnahme eines Festlegungselements, insbesondere Kabelbinders, deutlich ersichtlich sind. Weiters ist in Fig. 5 sowohl an den Schenkeln 4 als am Basiselement 2 eine im Wesentlichen mittig verlaufende Rippe 14 erkennbar, in welcher nicht nur an den Schenkeln 4 die Durchtrittslöcher 6 für ein Festlegungselement erkennbar sind, sondern es dient diese Verstärkung bzw. Rippe 14 insbesondere zur Erhöhung der Festigkeit sowohl des Basiselements 2 als auch der Schenkel 4.

Aus Fig. 5 ist weiters erkennbar, dass die Halteeinrichtung 1 in Längsrichtung der aufzunehmenden Kabel und/oder Kabelstränge, welche in Fig. 6 angedeutet sind, eine geringe Abmessung a aufweist, welche geringer als die Abmessung b des Basiselements 2 als auch die Abmessung bzw. Länge c der Schenkel 4 ist, welche in Richtungen normal auf die Längsrichtung der aufzunehmenden Kabel und/oder Kabelstränge verlaufen. Hierdurch ist ein geringerer Materialeinsatz als auch ein geringerer Aufwand für eine Festlegung und Positionierung von Kabeln oder Kabelsträngen bei Verwendung einer Halteeinrichtung 1 beispielsweise gegenüber einer Verwendung von üblicher Weise eine große Länge aufweisenden Kabeltrassen oder -rinnen erzielbar.

In der Darstellung gemäß Fig. 6 ist eine Anordnung bzw. Positionierung einer Mehrzahl von Kabeln 15 sowie Kabelsträngen bzw. -bäumen 16 an der Halteeinrichtung 1 gezeigt. Die Festlegung der einzelnen Kabel 15 bzw. Kabelstränge 16 erfolgt über von Kabelbindern 17 gebildete Festlegungselemente, wobei die Kabelbinder bzw. Festlegungselemente 17 sowohl in den Durchtrittslöchern 6 der Schenkel 4 als auch den Stegen bzw. Fortsätzen 8 des Basiselements 2 festgelegt bzw. gesichert sind.

Darüber hinaus ist in Fig. 6 angedeutet, dass die Halteeinrichtung 1 über die Kopplungseinrichtungen 7 an den Außenseiten der Schenkel 4 beispielsweise mit einer schematisch angedeuteten und teilweise dargestellten weiteren Halteeinrichtung 1' und/oder beispielsweise einer Schelle 18 zur Aufnahme einer nicht näher dargestellten Rohrleitung koppelbar ist.

Insbesondere zur Erzielung einer entsprechenden Festigkeit bzw. Steifigkeit der einzelnen Elemente der Halteeinrichtung 1 sowie zur Aufnahme entsprechend höherer Kräfte bei Einsatz eines Bolzensetzgeräts zur Festlegung des Basiselements 2 der Halteeinrichtung 1 ist die Halteeinrichtung 1 aus einem entsprechend widerstandsfähigen Material, beispielsweise Polypropylen, hergestellt.

In Abwandlung zu der dargestellten Ausführungsform können für eine Festlegung der in der Halteeinrichtung 1 aufzunehmenden und zu positionierenden Kabel 15 bzw. Kabelstränge 16 beispielsweise nur die Durchtrittslöcher 6 an den Schenkeln 4 oder alternativ die an dem Basiselement 2 vorgesehenen Fortsätze bzw. Stege 8 vorgesehen sein.

## Patentansprüche

1. Halteeinrichtung für wenigstens ein Kabel und/oder einen Kabelstrang, welche an einem Boden festlegbar ist, wobei ein Basiselement (2) zur Festlegung der Halteeinrichtung (1) an dem Boden (3) und zwei von den Enden des Basiselements (2) im Wesentlichen normal vorragende Schenkel (4) vorgesehen sind, wobei das Kabel (15) oder der Kabelstrang (16) zwischen den Schenkeln (4) anordenbar und positionierbar ist, und wobei die Abmessung (a) der Halteeinrichtung (1) in Längsrichtung des aufzunehmenden Kabels (15) oder Kabelstrangs (16) geringer als die Abmessungen (b, c) der Halteeinrichtung (1) in Richtungen normal auf die Längsrichtung des aufzunehmenden Kabels (15) oder Kabelstrangs (16) ist, **dadurch gekennzeichnet, dass** an wenigstens einem Schenkel (4) der Halteeinrichtung (1) und/oder dem Basiselement (2) der Halteeinrichtung (1) wenigstens eine Aufnahme (6, 8) für ein Festlegungselement (17) zum Festlegen wenigstens eines Kabels (15) und/oder zum Bündeln wenigstens einiger Kabel eines Kabelstrangs (16) an der Halteeinrichtung (1) vorgesehen ist.

2. Halteeinrichtung nach Anspruch 1, **dadurch gekennzeichnet, dass** die Aufnahme an wenigstens einem Schenkel (4) der Halteeinrichtung (1), insbesondere an dem vom Basiselement (2) abgewandten Endbereich des Schenkels (4) als eine von einem Durchtrittsloch (6) gebildete Aufnahme für ein Festlegungselement (17) ausgebildet ist.

3. Halteeinrichtung nach Anspruch 1 oder 2, **dadurch gekennzeichnet, dass** die wenigstens eine Aufnahme für ein Festlegungselement (17) des Basiselements (2) an der von der Auflagefläche des Basiselements (2) an dem Boden (3) abgewandten Seite in Form eines in Abstand von der Oberfläche des Basiselements (2) angeordneten Stegs bzw. Fortsatzes (8) ausgebildet ist.

4. Halteeinrichtung nach Anspruch 3, **dadurch gekennzeichnet, dass** der Steg bzw. Fortsatz (8) im Wesentlichen parallel zur Oberfläche des Basiselements (2) und an seiner zur Oberfläche des Basiselements (2) gewandten Bodenfläche an seinem freien Ende mit einem Anschlag (10) zur Positionierung des Festlegungselements (17)versehen ist.

5. Halteeinrichtung nach einem der Ansprüche 1 bis 4, **dadurch gekennzeichnet, dass** das Festlegungselement (17) zum Festlegen wenigstens eines Kabels (15) und/oder zum Bündeln wenigstens einiger Kabel eines Kabelstrangs (16) an wenigstens einem Schenkel (4) oder dem Basiselement (2) von einem Kabelbinder gebildet ist.

6. Halteeinrichtung nach einem der Ansprüche 1 bis 5, **dadurch gekennzeichnet, dass** an den vom Basiselement (2) abgewandten Enden der Schenkel (4) in Richtung einer Verringerung des Abstands zwischen den Schenkeln (4) vorragende Verlängerungen (5) vorgesehen sind, welche im Wesentlichen parallel zu dem Basiselement (2) verlaufen.

7. Halteeinrichtung nach einem der Ansprüche 1 bis 6, **dadurch gekennzeichnet, dass** das Basiselement (2) wenigstens eine Durchtrittsöffnung (11) für ein Befestigungselement zur Festlegung der Halteeinrichtung (1) an dem Boden (3) aufweist.

8. Halteeinrichtung nach Anspruch 7, **dadurch gekennzeichnet, dass** eine Durchtrittsöffnung (11) mit einem von der Oberfläche des Basiselements (2) an der von einer Auflagefläche des Basiselements (2) an dem Boden (3) abgewandten Seite vorragenden Rand bzw. Kragen (12) versehen ist, welcher insbesondere zur Positionierung eines Bolzensetzgeräts zur Einbringung eines Bolzens durch die Durchtrittsöffnung (11) ausgebildet ist.

9. Halteeinrichtung nach Anspruch 7 oder 8, **dadurch gekennzeichnet, dass** eine zusätzliche Durchtrittsöffnung (13) für ein Befestigungselement insbesondere von einem Langloch gebildet ist, durch welches ein Befestigungselement, wie beispielsweise eine Schraube oder ein Stecknagel, für eine Festlegung des Basiselements (2) insbesondere über einen Dübel im Boden (3) hindurchführbar ist.

10. Halteeinrichtung nach einem der Ansprüche 1 bis 9, **dadurch gekennzeichnet, dass** wenigstens ein Schenkel (4) an seiner Außenseite mit einer Kopplungseinrichtung (7) für eine Kopplung mit einer weiteren Halteeinrichtung (1') oder einer Schelle (18), beispielsweise zur Aufnahme einer Rohrleitung ausgebildet ist.

11. Halteeinrichtung nach einem der Ansprüche 1 bis 10, **dadurch gekennzeichnet, dass** die Halteeinrichtung (1) aus einem widerstandsfähigen Kunststoff, insbesondere Polypropylen, hergestellt ist.

12. Verwendung einer Halteeinrichtung für wenigstens ein Kabel und/oder einen Kabelstrang nach einem der Ansprüche 1 bis 11 zur Halterung und Positionierung wenigstens eines Kabels (15) und/oder eines Kabelstrangs (16) in einem doppelten Boden oder dgl. eines Gebäudes.
